# EUROPEAN PATENT APPLICATION

(11) **EP 2 600 513 A1**
(43) Date of publication of application: **05.06.2013**
(21) Application number: 11191357.0
(22) Date of filing: 30.11.2011
(51) Int. Cl.: H02M 3/335

(54) **Power supply for LED light sources**

(71) Applicant: Vossloh-Schwabe Optoelektronik GmbH & Co. KG, 47475 Kamp Lintfort (DE)
(72) Inventor: Soldan, Michal, 906 15 Kosariská (SK); Skalický, Mário, 919 04 Smolenice (SK)
(74) Representative: Rüger, Barthelt & Abel

(57) **Abstract**

The inventive power supply (10) for an LED light source (11) comprises two flyback converters (19) and (20) which are connected in parallel and which are controlled by a single control unit (27). A measuring unit (39) may be provided which acquires at least one of the voltage drop across the LED light source (11), the current flowing through the LED light source (11), or the power supplied to the LED light source (11). The two flyback converters (19) and (20) are preferably operating in interleaved fashion so that the two switches S1 and S2 alternately open and close. Nonetheless, the control unit may define duty cycles different from 50% so that periods may exist in which both switches S1 and S2 are closed and/or periods in which both switches S1 and S2 are open.

## Description

The invention relates to a power supply for an LED light source.

LED light sources are increasingly used for lighting applications where they may replace incandescent lamps and even fluorescent lamps or other discharge lamps. It is known that LEDs must not be directly connected to the electrical grid. Neither can be used ballasts designed for driving fluorescent lamps. Many attempts have been made to design power supplies specifically adapted to power LEDs.

For powering LEDs WO 2004/057924 A1 discloses an LED power supply including a power converter with an isolating transformer. The primary winding of the transformer is connected to a controlled switch intermittently supplying current to the primary winding. A first secondary winding and the primary winding together form a flyback transformer which supplies power to the LEDs via a rectifier diode each time the switch opens. A second secondary winding in cooperation with the primary winding form a forward converter for charging a capacitor and providing a reference signal across a Zener diode. Further circuits are provided for controlling the voltage across the LED light source and/or the current flowing therethrough.

While this circuitry provides some degree of control of the operation of the LEDs it will inevitably have internal losses, which may decrease the overall efficacy of the LEDs and of the power supply when considered in combination. So engineers explicitly look for approaches for increasing the overall efficiency of LED lighting appliances.

A primary object of the invention is to provide a power supply, in particular a high-power supply, for an LED light source being reliable and efficient.

This objective is solved by the power supply according to claim 1 and by the method according to claim 14.

The inventive power supply comprises at least two flyback converters both comprising a switch, a transformer and a rectifier diode. The two converters are controlled by a control unit which controls the two flyback converters so that they power the LEDs in combination.

The total LED current is a combined current supplied by the two converters. The peak currents of the two converters are considerably smaller than the peak current of one single converter operating at the same switching frequency and supplying the same average current. Consequently, the RMS value of the supplied current of the inventive power supply is smaller than the RMS current of a single converter power supply. Although the switching losses of the two switches will add during the operation of the inventive power supply the efficacy may be superior over known concepts.

Another advantage is that the current drawn from the grid will have less harmonics so that the power factor of the power supply is improved. Furthermore, the inventive power supply can be designed for relatively high power ratings just by using at least two flyback converters and adding additional flyback converters if necessary.

The flyback converters comprise transformers which comprise isolated primary and secondary windings and provide galvanic isolation of the LEDs form the grid. Preferably the transformers comprise independent magnetic armatures which are magnetically decoupled. The magnetic flow of one transformer does not leak to another transformer.

Preferably the at least two switches of the inventive power supply are operated with one single fixed frequency. Moreover, the switches are preferably driven in a fixed phase relationship. Preferably a 180° phase relationship is used. It is possible, however, to use different timings, phases and switching schemes if desired. Moreover, it is possible to PWM modulate the switching frequency of at least one of the switches. This can be done for controlling the voltage across the LEDs, the current through the LEDs or the power supplied to the LEDs. In the course of the PWM modulation the duty cycle of the switching signal may be modified. This can be done to both switches in the same way. However, it is also possible to totally switch off one of the two flyback converters if desired while continuously operating the other. This can be used for achieving very deep dimming levels and to reduce the power losses under those conditions.

Moreover, it is possible to just operate one of the two flyback converters for emergency purposes. If, for example, a fault will be detected in one of the flyback converters the other may continue operation. So, higher reliability may be obtained.

Then control unit may basically define equal duty cycles for both switches. However, it is possible to have the control unit define different duty cycles for the two switches. It may be useful for example to watch the temperature of the switches and to reduce the duty cycle of the hotter switch if the two switches have different temperatures. It is possible to balance the operating temperatures of the two switches that way.

Further features of embodiments of the invention are to be taken from subclaims, the drawing and/or the description.

In the drawing:
Figure 1 discloses a schematic of the inventive power supply, and
Figure 2 illustrates currents of the power supply.

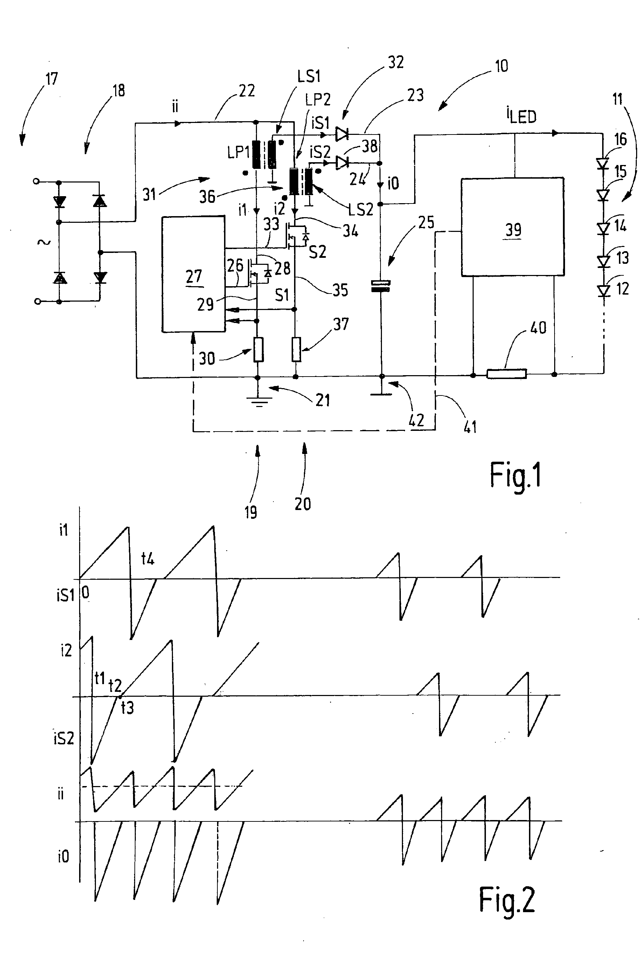

Figure 1 discloses a power supply 10 for an LED light source 11 consisting of at least one LED 12. Further LEDs 13 through 16 may be connected in series to LED 12. The number of LEDs may vary form embodiment to embodiment as may the colour and rated power. Moreover, further devices may be connected in parallel or in series to the illustrated LEDs. The term "LED" refers primarily to light emitting diodes and shall cover any semi-conductor based light source including organic LEDs.

The power supply 10 receives electrical energy from an electrical grid 17 and supplies LED current i_{LED} to the LED light source 11. While the electrical grid provides an alternating voltage between 100 V and 300 V (e.g. 230 V) at a frequency of 50 Hz or 60 Hz the LED current i_{LED} is mainly a direct current (DC). Preferably, the strength and waveform of the current will be controlled by the power supply 10.

The power supply 10 comprises a rectifier unit 18 transforming the AC voltage of grid 17 into a DC voltage with high crest. The voltage periodically varies from zero to peak voltage with a frequency double of the grid frequency.

Two flyback converters 19 and 20 are connected in parallel between primary ground line 21 and supply line 22. Supply line 22 is connected to the positive output of rectifier 18 while primary ground line 21 is connected to the negative output of rectifier 18. The two flyback converters 19 and 20 have outputs 23, 24 connected in parallel to a buffer capacitor 25 located on the secondary side for smoothening the output voltage and supplying DC current i_{LED} to the LED light source 11.

The first flyback converter 19 comprises a controllable switch S1, which may be any type of electronically controllable switches. Preferably switch S1 is a transistor of any suitable type e.g. a MOSFET, an IGBT, a Junction FET or the like. The control electrode (gate electrode) 26 is connected to a control unit 27 that gives control signals to the switch S1 for opening and closing a flow path between electrodes 28 and 29 (source and drain).

A shunt resistor 30 may be provided for sensing the current flowing through switch S1. Shunt resistor 30 is connected to the ground line 21 with one electrode thereof and to switch S1 at the other electrode thereof. The voltage dropping across shunt resistor 30 may be supplied to control unit 27. Moreover it is also possible to use just one common shunt resistor.

A primary winding LP1 of a transformer 31 is connected to line 22 at one end thereof and to switch S1 at the other end. The transformer 31 comprises a secondary winding LS1 which is connected to the secondary ground line 42 at one end thereof and to a rectifier diode 32 at the other end thereof. Rectifier diode 32 in turn is connected to the buffer capacitor 25. Phase dots at windings LP1 and LS1 indicate the orientation of windings LP1 and LS1 relative to one another in figure 1.

Flyback converter 20 may have basically the same structure. In short, a second switch S2 is provided having a gating electrode 33, which also is connected to control unit 27. Further electrodes 34, 35 are connected to the primary winding LP2 of a second transformer 36 and to a shunt resistor 37, respectively. Then second transformer 36 comprises a second secondary winding LS2 which is connected to a second rectifier diode 38 which has the same polarity as does the first rectifier diode 32 and which is also connected to the buffer capacitor 25 for charging.

The two flyback converters 19 and 20 may comprise further devices. Figure 1 and the description are restricted to main components of the converters, however. It should be well understood that the two flyback converters 19 and 20 may have the same structure, devices, and rated power if desired. However, it is possible to differently design the two flyback converters 19 and 20, if appropriate. This may be useful if a wide dimming range is desired. In those cases full power is obtained by running both flyback converters 19 and 20 and the deepest dimming level is reached by running only the smaller converter of the flyback converters 19 and 20 with reduced power. Further it is to be understood that one or some more flyback converters may be connected in parallel to the two flyback converters 19 and 20 if desired. This may be useful to obtain higher rated powers just by using an appropriate number of smaller basic flyback converters for charging the (one and only) buffer capacitor 25. Further it may be understood that capacitor 25 may be any type of capacitor. It may be one single device or a combination of different capacitors, filters or the like.

It is noted that transformers 31 and 36 have separate cores and preferably do not magnetically couple one to another. It is to be understood that the transformers 31, 36 may have further windings, e.g. windings which may be connected to control unit 27. Those control windings may be used for controlling the flyback converters 19 and 20.

Control unit 27 may be connected to a measuring unit 39, which is connected to the LED light source 11. A shunt resistor 40 may be connected in series to LED source 11. The measuring unit 39 senses the voltage drop over the LED light source 11 and the voltage drop on shunt resistor 40 for acquiring data indicating the voltage across and/or the current i_{LED} through the LED light source 11. Signals characterizing the voltage drop across LED light source 11 and/or LED current i_{LED} may be sent via channel 41 to the control unit 27. The channel 41 may comprise one or several lines as appropriate.

In operation flyback converters 19 and 20 preferably are operated in an interleaved order. Basically, the first switch S1 and the second switch S2 alternately open and close. Figure 2 provides the timing of the currents resulting therefrom. The left part of Figure 2 shows the current i1 flowing through switch S1 and the current i2 flowing through switch S2. It is assumed that both flyback converters 19 and 20 operate with full power in a slightly overlapping fashion. Shortly after i1 starts rising (switch S1 is closed) the current i2 flowing through switch S2 peaks. At the time t1 switch S2 opens while switch S1 remains closed. Opening switch S2 interrupts current i2 so that it drops to 0. However, the current commutes to the secondary winding LS2. The resulting current iS2 de-charges the second transformer 36 and charges the capacitor 25. Preferably the de-charging current iS2 will reach 0 within short. Once it reached 0 at a point of time t2 or shortly thereafter at a point of time t3 switch S2 may again be closed. The current i2 may rise again. Meanwhile or shortly afterwards switch S1 may open and interrupt the primary current i1. This generates the secondary current iS1 of the first flyback converter 19, which de-charges the first transformer 31 and charges the capacitor 25.

As can be seen the two charging currents i1 and i2 combine into an input current ii which may be well above 0 and has a rather low ripple. The peak values are not much above the average value marked by a dotted line in Figure 2. Consequently, the losses depending on the root mean square (RMS) value of the current will be restricted to low numbers.

The same is true for the output current io illustrated in figure 2. It can be seen that the two flyback converters 19 and 20 operating according an interleaved scheme will produce lower ohmic (resistive) dissipation than one single flyback converter operating at the same frequency and outputting higher peaks. The control unit 27 may control the power of the two flyback converters 19 and 20 by pulse width modulating (PWM) the control signals controlling the switches S1 and S2. The right part of Figure 2 illustrates the operation of the two flyback converters 19 and 20 with reduced duty cycles. While the switches S1 and S2 are switched on for more than 50% of one cycle at the left hand side of Figure 2 they are switched on for less than 50% of one cycle in the right part of Figure 2. It is seen that still both flyback converters 19 and 20 have the same or at least similar duty cycles. However, it is noted that it is also possible to operate the two flyback converters 19 and 209 with different duty cycles.

The measurement unit 39 may primarily be a current sensor sensing the LED current i_{LED}. It may be desired to keep this current constant under most working conditions. If so, measuring unit 39 sends signals to control unit 27 for varying the duty cycles of the two flyback converters 19 and 20 to match the LED current i_{LED} to the desired current. The measuring unit 39 measures a value which indicates the current i_{LED} supplied to the LED light source 11. The signal supplied via channel 41 to control unit 27 may be compared by the control unit 27 with a reference value. The control unit 27 will produce an error value indicating any mismatch between the reference value and the sensed value of the LED current i_{LED}. Depending on the sign and the size of that error value it will increase or decrease the duty cycles of the two flyback converters 19 and 20 in synchronism and operate the switches S1 and S2 according to these duty cycles. Alternatively the control unit 27 may vary just the duty cycle of one of the converters 19 and 20.

The inventive power supply 10 for an LED light source 11 comprises two flyback converters 19 and 20 which are connected in parallel and which are controlled by a single control unit 27. A measuring unit 39 may be provided which acquires at least one of the voltage drop across the LED light source 11, the current flowing through the LED light source 11, or the power supplied to the LED light source 11. The two flyback converters 19 and 20 are preferably operating in interleaved fashion so that the two switches S1 and S2 alternately open and close. Nonetheless, the control unit may define duty cycles different from 50% so that periods may exist in which both switches S1 and S2 are closed and/or periods in which both switches S1 and S2 are open.

### Reference Numbers:

- 10: Power Supply
- 11: LED Light Source
- 12 - 16: LEDs
- 17: Electrical Grid
- i_{LED}: LED Current
- 18: Rectifier
- 19: First flyback Converter
- 20: Second flyback Converter
- 21: Primary ground
- 22: Supply Line
- 23: Output
- 24: Output
- 25: Buffer Capacitor
- S1: First Switch
- 26: Electrode (Gate)
- 27: Control unit
- 28, 29: Electrodes (Drain, Source)
- 30: Shunt Resistor
- LP1: First Primary Winding
- LS1: First Secondary Winding
- 31: First Transformer
- 32: First Rectifier Diode
- S2: Second Switch
- 33: Electrode (Gate)
- 34, 35: Electrodes (Source, Drain)
- LP2: Second primary Winding
- LS2: Second Secondary Winding
- 36: Second Transformer
- 37: Shunt Resistor
- 38: Second Rectifier Diode
- 39: Measuring Unit
- 40: Shunt Resistor
- 41: Feedback loop/channel
- 42: Secondary ground

## Claims

1. A power supply (10) for a LED light source (11), said power supply (10) comprising:
a first flyback converter (19) including a first controllable switch (S1), a first transformer (31), and a first rectifier (32);
a second flyback converter (20) including a second controllable switch (S2), a second transformer (36), and a second rectifier (38);
the rectifiers (32, 38) supplying current (io) to at least one LED (12) and generating a voltage across them;
a control unit (27) controlling the first and second switches (S1, S2) for periodically opening and closing them.

2. The power supply according claim 1, wherein the control unit (27) opens and closes the two switches (S1, S2) with a fixed frequency.

3. The power supply according claim 1 or 2, wherein the control unit (27) operates the two switches (S1, S2) in a fixed phase relationship.

4. The power supply according to at least one of the preceding claims, wherein the two switches (S1, S2) are operated in a 180° phase relationship.

5. The power supply according to at least one of the preceding claims, wherein the control unit (27) senses at least one of the current (i_{LED}) supplied to the LED light source (11), the voltage drop across the LED light source (11), and the power supplied to the LED light source (11).

6. The power supply according to at least one of the preceding claims, wherein the control unit (27) controls a duty cycle of at least one of the switches (S1, S2).

7. The power supply according to at least one of the preceding claims, wherein the control unit (27) controls the duty cycles of the two switches (S1, S2).

8. The power supply according to at least one of the preceding claims, wherein the control unit (27) defines equal duty cycles for both switches (S1, S2).

9. The power supply according to at least one of the preceding claims, wherein the control unit (27) defines different duty cycles for the two switches (S1, S2).

10. The power supply according to at least one of the preceding claims, wherein the control unit (27) disables one of the switches (S1, S2) for reducing the power supplied to the LED light source (11).

11. The power supply according to at least one of the preceding claims, wherein a third/further flyback converter including a third/further controllable switch, a third/further transformer, and a third/further rectifier is provided, the third/further rectifier supplying current to at least one LED.

12. The power supply according to at least one of the preceding claims, wherein the transformer (31) comprises at least one primary winding (LP1) connected to the switch (S1) and at least one secondary winding (LS1) connected to the rectifier (32), the inductances thereof provide a primary current flow cycle which is longer than the secondary current flow cycle.

13. The power supply according to at least one of the preceding claims, wherein the first and the second flyback converters (19, 20) are identical one to another.

14. A method for providing power to at least one LED, using at least two flyback converters (19, 20) controlled by a single control unit (27), comprising the steps of:
measuring a value indicative for at least one of the power supplied to the at least one LED light source (11), the current supplied to the at least one LED light source (11), and the voltage across the at least one LED light source (11);
comparing the value with a reference value;
defining a first duty cycle of the first flyback converter (19) based on that comparison;
defining a second duty cycle of the second flyback converter (20) based on that comparison;
operating the converters according to the first and second duty cycles.
